(19) Europäisches Patentamt
European Patent Office
Office européen des brevets

(11) **EP 4 451 582 A1**

(12) **EUROPEAN PATENT APPLICATION**

(43) Date of publication:
**23.10.2024 Bulletin 2024/43**

(51) International Patent Classification (IPC):
***H04J 3/06*** *(2006.01)*

(21) Application number: **23305616.7**

(52) Cooperative Patent Classification (CPC):
**H04J 3/0661; G05B 19/054;** H04J 3/0667

(22) Date of filing: **20.04.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SCHNEIDER ELECTRIC INDUSTRIES SAS**
**92500 Rueil-Malmaison (FR)**

(72) Inventor: **AFSHARI, William**
**06570 Saint-Paul-de-Vence (FR)**

(74) Representative: **Schneider Electric Service Propriété Industrielle 35, rue Joseph Monier 92500 Rueil-Malmaison (FR)**

(54) **ABSOLUTE TIME IN INDUSTRIAL SYSTEM**

(57) The invention relates to an industrial system for controlling backplane communication, comprising:
a microcontroller (MC),
a first time module (TM1) belonging to a first time domain and generating a first timestamp (tsli) at an event,
a second time module (TM2) belonging to a second time domain and able to communicate with at least one Input/Output, I/O, module (IOM), generating a second timestamp ($ts2_i$) at the event,
wherein the microcontroller (MC), the first time module (TM1) and the second time module (TM2) are included in a control manager (CM) able to communicate with at least one Input/Output, I/O, module (IOM),
wherein the microcontroller (MC) is configured to:
calculate an offset ($O_{Si}$) between the second timestamp and the first timestamp,
compute a clock ratio ($cr_i$) between the second time domain and the first time domain,
transmit a message to said at least one I/O module (IOM), the message comprising the second timestamp ($ts2_i$), the offset ($O_{Si}$) and the clock ratio ($cr_i$).

FIG. 2

S1 — TM1, TM2 : generating $ts1_i$ and $ts2_i$

S2 — MC : calculating $Os_i$

S3 — MC : calculating $Cr_i$

S4 — MC → [ $ts2_i$, $Os_i$, $Cr_i$ ] → IOM

S5 — IOM : calculating Ats based on Mts, $ts2_i$, $Os_i$, $Cr_i$

EP 4 451 582 A1

**Description**

FIELD OF INVENTION

The present disclosure relates generally to industrial networks and, more particularly, to systems that support multiple industrial Ethernet protocols, fieldbus protocols, and industrial application processing, and provide high performance for backplane communication for programmable logic controller in industrial architecture.

BACKGROUND

Industrial automation/control systems are employed for controlling operation of a wide variety of systems, including processes, machines, etc., and are typically adaptable to different control applications through configuration and interconnection of multiple control system components or devices, such as control modules, Input/Output (I/O) modules, I/O devices, etc. Existing industrial control systems typically include a processor running or executing a control program to interact with an I/O system (e.g., typically one or more I/O modules or devices) to receive system information in the form of analog and/or digital inputs from field sensors and to provide outputs (analog and/or digital) to one or more actuators. Industrial control systems are increasingly being interconnected with management information and other systems in a manufacturing facility, and may be operatively connected to any number of communications networks to facilitate various business management functions such as inventory control, accounting, manufacturing control, etc., in addition to the process/machine control functionality.

A desire to integrate the business and control network structures to interconnect industrial control systems with general purpose systems, along with the evolution and development of fast Ethernet (e.g., in switch mode with full duplex capability), has allowed for Industrial Ethernet networks (e.g., such as Ethernet/IP networks that allow for direct connection of field devices to an Ethernet network) to be widely used in industrial applications. Indeed, industrial Ethernet is becoming the dominant (if not incumbent) technology in industrial automation.

In a slice I/O architecture, a standalone I/O island is connected to a control device like a programmable logic controller PLC with a fieldbus like Ethernet/IP and contains a head driving controls of I/O modules respectively through control managers. A cluster is a set of I/O modules physically linked together through a backplane and an I/O module is a usual automation module converting electrical signals to digital values. In a cluster, the control manager and different modules can communicate by means of their respective switches through a multipoint communication line.

For example, a port of a switch may be configured to send a specific frame at a schedule time window, especially if the switches share a same clock and are synchronized. The heads and the cluster managers can be synchronized using a Generalized Precision Time Protocol (gPTP) which employs layer 2 (Ethernet) messages to establish a hierarchy of clocks and synchronize time in a gPTP domain which the heads and the control managers belong to. For real-time communication with non-negotiable time boundaries for end-to-end transmission latencies, all switches should have a common time reference as their clocks are synchronizes among each other.

There are time synchronization standards that provide the possibility to bring time synchronization and absolute time to the end devices, as I/O modules, like PTP-1588v2, 802.1AS-2011, 802.1AS-2020, NTP...

A known time synchronization architecture that brings sub-microsecond absolute time to the end devices is to base the TSN communications over PTP. However, when a desynchronization occurs in the PTP Master time domain, all the underneath devices are also desynchronized. This leads to a TSN communications disruption and to potential critical issues/situations that are not acceptable in an industrial environment.

There is therefore a need for keeping time precision (at sub-microsecond) to the end devices when a desynchronization occurs in the PTP master time domain.

SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided an industrial system for controlling backplane communication, comprising:

a microcontroller,
a first time module belonging to a first time domain and generating a first timestamp ($ts1_i$) at an event,
a second time module belonging to a second time domain and able to communicate with at least one Input/Output, I/O, module, generating a second timestamp at the event,
wherein the microcontroller is configured to:

calculate an offset between the second timestamp and the first timestamp,

compute a clock ratio between the second time domain and the first time domain,

transmit a message to said at least one I/O module, the message comprising the second timestamp, the offset and the clock ratio.

Advantageously, the industrial system provides a timestamping correction instead of time correction and provides safe TSN communications without disruptions when desynchronization occurs between the first time module and the second time module. With timestamping correction, the industrial system brings the absolute time with sub-microsecond precision to the end devices, i.e. the I/O modules.

Moreover, the industrial system allows to keep the internal PTP time decorrelated from the fieldbus PTP time, i.e. the first time module being decorrelated from the second time module, and to let the first time module and the second time module drift from each other. Indeed the timestamping correction replaces the time resynchronization for communication with sub-microsecond precision.

In an embodiment, said at least one I/O module is configured to calculate an absolute timestamp based on a module timestamp, the second timestamp, the offset and the clock ratio.

In an embodiment, the module timestamp is generated after the first timestamp and the second timestamp.

In an embodiment, the event corresponds to a Timestamp Triggering Cycle.

In an embodiment, the clock ratio is determined based on a ratio between the time interval for two consecutive primary timestamps and the time interval for two consecutive secondary timestamps.

In an embodiment, the absolute timestamp is calculated as the sum of the module timestamp, the offset and the product of the difference between the clock ratio and one by the difference of the module timestamp and the second timestamp.

In an embodiment, the first time module is able to run a Generalized Precision Time Protocol stack in slave mode in the first domain, and is able to communicate with a time standard manager which runs a Generalized Precision Time Protocol stack in master mode, in order to be synchronized in time with the time standard manager.

In an embodiment, the microcontroller, the first time module and the second time module are included in a control manager.

In an embodiment, the control manager is included in a programmable logic controller.

In an embodiment, the time standard manager is linked to a primary time standard by which the world regulates clocks and time.

In another implementation, there is provided a method for controlling backplane communication of an industrial system that comprises:

a microcontroller,
a first time module belonging to a first time domain and generating a first timestamp at an event,
a second time module belonging to a second time domain and able to communicate with at least one Input/Output, I/O, module, generating a second timestamp at the event,
the method comprising the following steps in the microcontroller,
calculating an offset between the second timestamp and the first timestamp,
computing a clock ratio between the second time domain and the first time domain,
transmitting a message to said at least one I/O module, the message comprising the second timestamp, the offset and the clock ratio

In another implementation there is provided a computer-readable medium having embodied thereon a computer program for executing a method for controlling backplane communication of an industrial system. Said computer program comprises instructions which carry out steps according to the method according to the invention.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

FIG. 1 shows a schematic block diagram of an industrial communication system for controlling backplane communication according to one embodiment;

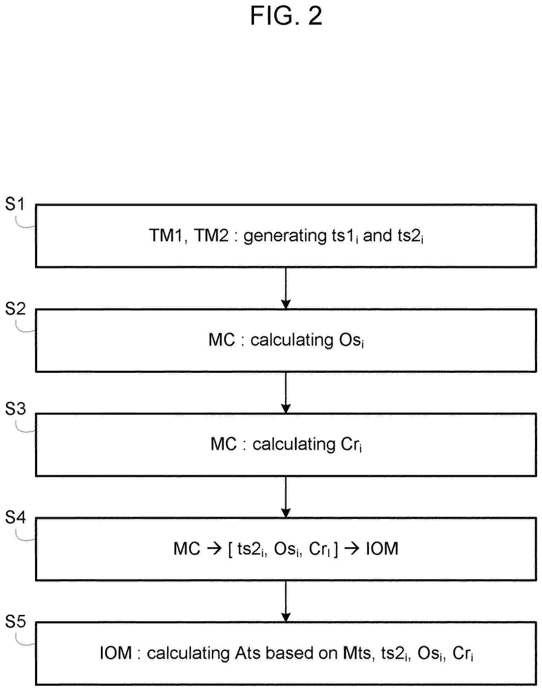

FIG. 2 is a flow diagram of a method for controlling backplane communication of an industrial system according to one embodiment;

FIG. 3 illustrates an example of timestamping correction diagram according to one embodiment.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In order to provide needed networking and communication support for Automated Control Systems, IEEE 802.1 time sensitive network (TSN) has emerged as a popular technology. TSN refers to the IEEE 802.1Q defined standard technology to provide deterministic messaging on standard Ethernet. TSN is a Layer 2 technology and is centrally managed and delivers guarantees of delivery and minimized jitter using time scheduling for those real-time applications that require determinism.

The IEEE 802.1Q standards work at OSI Layer 2. TSN is an Ethernet standard, rather than an Internet Protocol (IP) standard. The forwarding decisions made by the TSN bridges use the Ethernet header contents, not the IP address. The payloads of the Ethernet frames can be anything and are not limited to IP. This means that TSN can be used in any environment and can carry the payload of any industrial application.

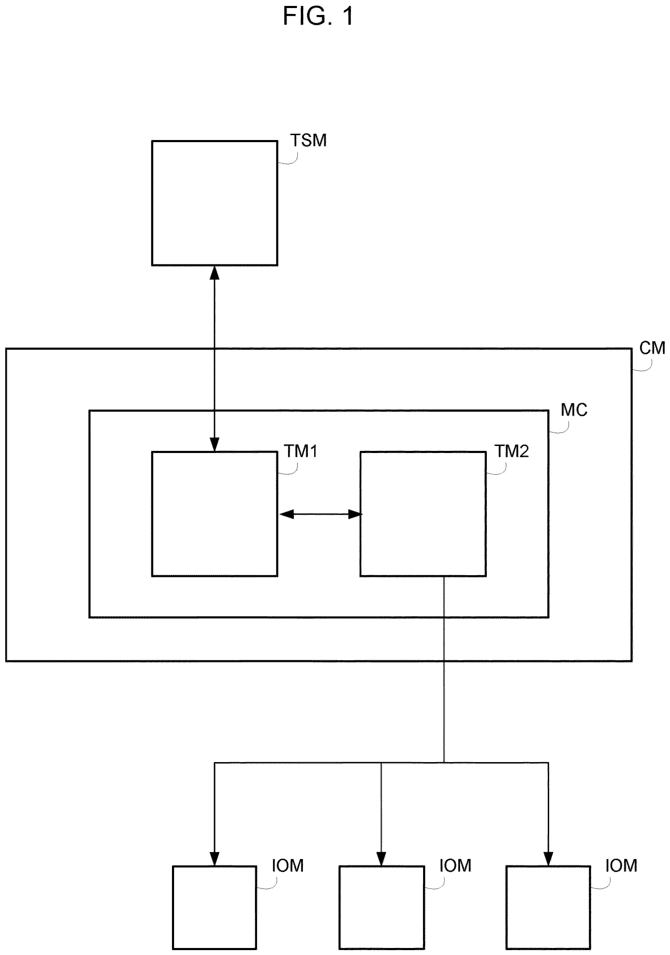

Referring to FIG. 1, an industrial communication system comprises a control manager CM, a time standard manager TSM, a set of I/O modules IOM. Furthermore, the industrial communication system comprises a communication line linking the control manager CM and the set of I/O modules IOM.

The control manager CM is able to manage communication with a set of I/O modules IOM, via the communication line, and with the time standard manager TSM, via Ethernet and CAN (Controller Area Network) bus for example.

The communication line can be a unidirectional communication line or a multipoint communication line, like an Ethernet bus or a multipoint low voltage differential signaling (MLVDS) bus.

An I/O module IOM can include Analog to Digital Converter (ADC) and Digital to Analog Converter (DAC) for connecting to sensors and the real world, communications modules, digital inputs and outputs, relays, and more. An I/O module communicates with the control manager CM through the communication bus with adapted packet formats.

In one embodiment, the control manager CM is included in a programmable logic controller PLC and is driven by a head that can drive other control managers. In one embodiment, the control manager CM is included in the head connected via a fieldbus to a control device like a PLC. In one embodiment, the head is also included in the PLC.

In one embodiment, the time standard manager TSM is linked to a primary time standard by which the world regulates clocks and time, like the Coordinated Universal Time or UTC or the International Atomic Time.

The control manager CM comprises a microcontroller MC implementing a primary switch. Also an Input/Output module IOM comprises a secondary switch that can be implement in a microcontroller. The primary switch and the secondary switch are defined as TSN switches which allow a communication between the control manager and an I/O module without any collision in the data traffic. As mentioned before, TSN is a technology that is focused on time, and was developed to provide a way to make sure information can travel from point A to point B in a fixed and predictable amount of time.

More especially, the microcontroller MC comprises a first time module TM1 belonging to a first time domain and a second time module TM2 belonging to a second time domain.

The first time module TM1 is a time-aware relay and implements for example the standard 802.1AS-Rev, and can be synchronized in time in a gPTP domain which heads and other control managers belong to.

The first time module TM1 is able to run a gPTP stack in slave mode in the gPTP domain, as first time domain, and is able to communicate with the time standard manager TSM which runs a gPTP stack in master mode, in order to be synchronized in time with the time standard manager TSM.

The second time module TM2 is able to run a PTP stack, called sPTP, in master mode in a second domain, called sPTP domain, which the control manager and the I/O modules belong to.

The I/O module is able to run a sPTP stack in slave mode in order to be synchronized with the second time module TM2 of the control manager CM running a sPTP stack in master mode.

In this architecture, all the elements of a whole industrial system should be updated and synchronized in time: in the gPTP domain encompassing a northbound network and synchronizing all the control managers with heads, and in the sPTP domain encompassing a southbound network in each control of I/O modules and synchronizing all the I/O modules managers with their respective control manager.

More especially, the first time module TM1 and the second time module TM2 implement respectively a first clock and a second clock, whereas an I/O module implements another clock, called module clock.

Also, the first clock is associated with a first counter and the second clock is associated with a second counter, whereas the module clock is associated with a module counter. The synchronization between the first clock and the second clock is normally done by adapting the frequency of the second counter with the frequency of the first counter. Also the synchronization between the second clock and the module clock is normally done by adapting the frequency of the module counter with the frequency of the second counter

However when a desynchronization occurs in the gPTP domain, i.e. when the first time module TM1 and the second time module TM2 are desynchronized, all the underneath devices, i.e. the I/O modules, are also desynchronized. It means that, even if the control manager and an I/O module are synchronized in the second time domain, the module counter of the I/O module has drifted from the first counter of the control manager belonging to the first time domain. The counter drift may refer to several related phenomena where a counter (second counter) does not run at exactly the same rate as a reference counter (first counter).

The microcontroller MC is configured to let the first counter and the second counter drift from each other and to retrieve information allowing to estimate this drift.

To that end, the microcontroller MC is configured to trigger at the same time the first time module and the second time module to generate respectively a first timestamp and a second timestamp. In one embodiment, an event for such a trigger can be the period of Timestamp Triggering Cycle (TTC). In one embodiment, the microcontroller MC is configured to trigger the first time module and the second time module at cyclical events.

The microcontroller MC is configured to calculate an offset between the second timestamp and the first timestamp at the time of the event.

The microcontroller MC is configured to compute a clock ratio between the second time domain and the first time domain based on a ratio between the time interval for two consecutive first timestamps and the time interval for two consecutive second timestamps.

The microcontroller MC is configured to transmit a message to at least one I/O module IOM, the message comprising the second timestamp, the offset and the clock ratio.

Each I/O module IOM generates a module timestamp at another event from the one of the first time module TM1 and the second time module TM2. In one embodiment, the module timestamp can be generated cyclically.

With the information contained in the received message, the I/O module IOM is able to calculate an absolute timestamp based on the module timestamp, the second timestamp, the offset and the clock ratio.

In one embodiment, the I/O module IOM corrects or replaces the module timestamp with the calculated absolute timestamp.

Thanks to the calculated absolute timestamp, each I/O module is able transmit I/O data at respective scheduled static time windows with deterministic latency at each time cycle.

Once all the I/O module got the absolute timestamp, in the sPTP domain and thus in the gPTP domain, all switches have a common time reference for real-time communication with non-negotiable time boundaries for end-to-end transmission latencies. The control manager CM is able to communicate with other cluster manager and the set of I/O modules as if it was synchronized in time with both the time standard manager TSM and the set of I/O modules.

S

In step S1, the first time module TM1 belonging to the first time domain and the second time module TM2 belonging to the second time domain generate respectively a first timestamp ts1 and a second first timestamp ts2 at the same time, e.g. at the same event.

For example, at each cycle "i", a first timestamp $ts1_i$ and a second first timestamp $ts2_i$ are generated.

In step S2, the microcontroller MC retrieves the first timestamp $ts1_i$ and a second first timestamp $ts2_i$ and calculates an offset $Os_i$ between the second timestamp $t2_i$ and the first timestamp $ts1_i$. The offset can be defined as:
$Os_i = ts2_i - ts1_i$

In step S3, the microcontroller MC computes a clock ratio between the second time domain and the first time domain based on a ratio between the time interval for two consecutive primary timestamps and the time interval for two consecutive secondary timestamps.

A clock ratio $cr_i$ for cycle "i" can be defined as the ratio between the time interval for two consecutive primary timestamps and the time interval for two consecutive secondary timestamps as such:

$$cr_i = (ts1_i - ts1_{i-1})/(ts2_i - ts2_{i-1})$$

In step S4, the microcontroller MC transmits a message to at least one Input/Output module IOM, the message comprising the second timestamp $ts2_i$, the calculated offset and the computed clock ratio $cr_i$.

In step S5, the I/O module IOM calculates an absolute timestamp Ats based on a module timestamp Mts, the second timestamp, the offset and the clock ratio. The module timestamp Mts can be generated at any time after the generation of the first timestamp and the second timestamp.

The absolute timestamp Ats can be defined as the sum of the module timestamp Mts, the offset $Os_i$ and the product of the difference between the clock ratio $cr_i$ and one by the difference of the module timestamp Mts and the second timestamp $ts2_i$.

The absolute timestamp Ats can be defined as :

$$Ats = Mts + Os_i + (cr_i - 1)*(Mts - ts2_i)$$

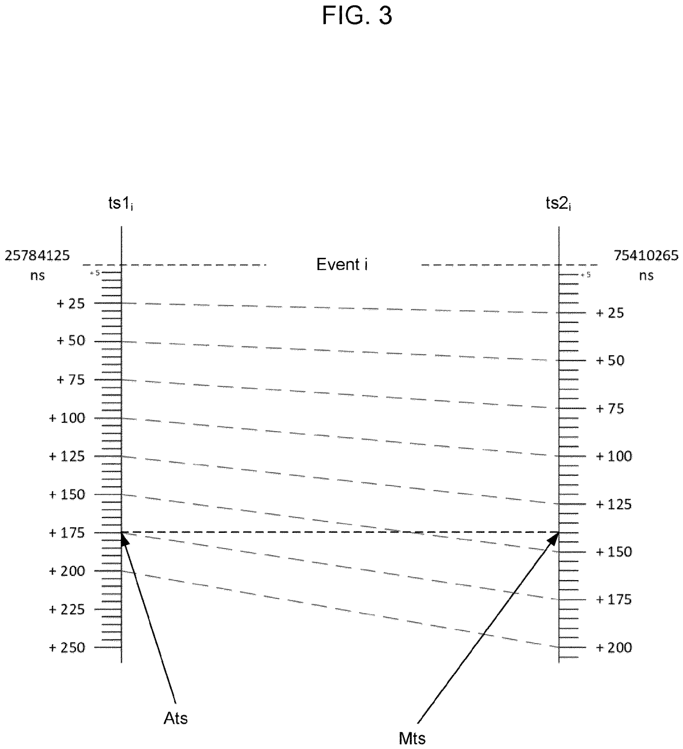

Referring to FIG. 3, in one illustrative example, the I/O module IOM triggers a module timestamp Mts after having received the message from the microcontroller MC (so after the generation of the first timestamp $ts1_i$ and the second first timestamp $ts2_i$).

The module timestamp Mts is generated at the following time for the counter of the I/O module (corresponding to the counter of the first time module TM1):

$$Mts = ts2_i + 140 = 75\ 410\ 265 + 140 = 75\ 410\ 405 \text{ ns.}$$

The first timestamp $ts1_i$ was generated at time: $ts1_i = 25\ 784\ 125$ ns

The second timestamp $ts2_i$ was generated at time: $ts2_i = 75\ 410\ 265$ ns

The offset $Os_i$ was calculated as: $Os_i = ts2_i - ts1_i = -49\ 626\ 140$ ns

The clock ratio $cr_i$ was calculated as: $cr_i = (ts1_i - ts1_{i-1})/(ts2_i - ts2_{i-1}) = 1{,}25$

The I/O module IOM is able to calculate the absolute timestamp Ats as:

$$Ats = Mts + Os_i + (cr_i - 1)*(Mts - ts2_i)$$

$$Ats = 75\ 410\ 405 + (-49\ 626\ 140) + (1{,}25 - 1) * (75\ 410\ 405 - 75\ 410\ 265)$$

$$Ats = 25\ 784\ 300 \text{ ns}$$

In the first time domain, the module timestamp Mts was actually generated at the following time (for the counter of the first time module TM1):

$$ts2_i + 175 = 25\,784\,125 + 175 = 25\,784\,300 \text{ ns}$$

It is apparent that both are equal, so the I/O module IOM is able to correct the generated module timestamp Mts to obtain the absolute timestamp Ats, which corresponds to the value of the counter of the first time module TM1 at the time of the generation of the module timestamp Mts.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments

**Claims**

1. An industrial system for controlling backplane communication, comprising:

    a microcontroller (MC),
    a first time module (TM1) belonging to a first time domain and generating a first timestamp ($ts1_i$) at an event,
    a second time module (TM2) belonging to a second time domain and able to communicate with at least one Input/Output, I/O, module (IOM), generating a second timestamp ($ts2_i$) at the event,
    wherein the microcontroller (MC) is configured to:

        calculate an offset ($Os_i$) between the second timestamp and the first timestamp,
        compute a clock ratio ($cr_i$) between the second time domain and the first time domain,
        transmit a message to said at least one I/O module (IOM), the message comprising the second timestamp ($ts2_i$), the offset ($Os_i$) and the clock ratio ($cr_i$).

2. An industrial system according to claim 1, wherein said at least one I/O module (IOM) is configured to calculate an absolute timestamp (Ats) based on a module timestamp (Mts), the second timestamp ($ts2_i$), the offset ($Os_i$) and the clock ratio ($cr_i$).

3. An industrial system according to claims 2, wherein the module timestamp (Mts) is generated after the first timestamp and the second timestamp.

4. An industrial system according to any of previous claims, wherein the event corresponds to a Timestamp Triggering Cycle.

5. An industrial system according to any of previous claims, wherein the clock ratio ($cr_i$) is determined based on a ratio between the time interval for two consecutive primary timestamps and the time interval for two consecutive secondary timestamps.

6. An industrial system according to claim 2, wherein the absolute timestamp (Ats) is calculated as the sum of the module timestamp (Mts), the offset ($Os_i$) and the product of the difference between the clock ratio ($cr_i$) and one by the difference of the module timestamp (Mts) and the second timestamp ($ts2_i$).

7. An industrial system according to any of previous claims, wherein the first time module (TM1) is able to run a Generalized Precision Time Protocol stack in slave mode in the first domain, and is able to communicate with a time standard manager (TSM) which runs a Generalized Precision Time Protocol stack in master mode, in order to be synchronized in time with the time standard manager (TSM).

8. An industrial system according to any of previous claims, wherein the microcontroller (MC), the first time module (TM1) and the second time module (TM2) are included in a control manager (CM).

9. An industrial system according to claim 8, wherein the control manager (CM) is included in a programmable logic controller.

10. An industrial system according to claim 7, wherein the time standard manager (TSM) is linked to a primary time standard by which the world regulates clocks and time.

11. A method for controlling backplane communication of an industrial system that comprises:

a microcontroller (MC),
a first time module (TM1) belonging to a first time domain and generating a first timestamp ($ts1_i$) at an event,
a second time module (TM2) belonging to a second time domain and able to communicate with at least one Input/Output, I/O, module (IOM), generating a second timestamp ($ts2_i$) at the event,
the method comprising the following steps in the microcontroller (MC):

calculating (S2) an offset ($Os_i$) between the second timestamp and the first timestamp,
computing (S3) a clock ratio ($cr_i$) between the second time domain and the first time domain,
transmitting (S4) a message to said at least one I/O module (IOM), the message comprising the second timestamp ($ts2_i$), the offset ($Os_i$) and the clock ratio ($cr_i$).

12. A method according to claim 11, wherein the method further comprises in the at least one I/O module (IOM):
calculating (S5) an absolute timestamp (Ats) based on the module timestamp (Mts), the second timestamp ($ts2_i$), the offset ($Os_i$) and the clock ratio ($cr_i$).

13. A computer-readable medium having embodied thereon a computer program for executing a method for controlling backplane communication of an industrial system according to any of claims 11 to 12.

# FIG. 1

TSM

CM

MC

TM1   TM2

IOM   IOM   IOM

# FIG. 2

S1
$$\boxed{\text{TM1, TM2 : generating } ts1_i \text{ and } ts2_i}$$

S2
$$\boxed{\text{MC : calculating } Os_i}$$

S3
$$\boxed{\text{MC : calculating } Cr_i}$$

S4
$$\boxed{\text{MC} \rightarrow [\, ts2_i,\ Os_i,\ Cr_i\,] \rightarrow \text{IOM}}$$

S5
$$\boxed{\text{IOM : calculating Ats based on Mts, } ts2_i,\ Os_i,\ Cr_i}$$

# FIG. 3

Europäisches
Patentamt
European
Patent Office
Office européen
des brevets

**EUROPEAN SEARCH REPORT**

Application Number

EP 23 30 5616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 149 027 A1 (SCHNEIDER ELECTRIC IND SAS [FR]) 15 March 2023 (2023-03-15) | 1-5,8,9, 11,13 | INV. H04J3/06 |
| A | * paragraph [0001] * <br> * paragraph [0004] * <br> * paragraph [0009] * <br> * paragraph [0013] * <br> * paragraph [0020] * <br> * paragraph [0041] - paragraph [0042] * <br> * paragraph [0057] - paragraph [0059] * <br> * paragraph [0066] * <br> * paragraph [0069] - paragraph [0070] * <br> * figure 1 * | 6,7,10, 12 | |
| A | WO 2020/200947 A1 (NOKIA TECHNOLOGIES OY [FI]) 8 October 2020 (2020-10-08) <br> * paragraph [0014] - paragraph [0016] * <br> * paragraph [0023] * <br> * paragraph [0031] - paragraph [0033] * <br> * figure 2 * | 1-13 | |
| A | FERRARI P ET AL: "On the Seamless Interconnection of IEEE1588-Based Devices Using a PROFINET IO Infrastructure", IEEE TRANSACTIONS ON INDUSTRIAL INFORMATICS, IEEE SERVICE CENTER, NEW YORK, NY, US, vol. 6, no. 3, 1 August 2010 (2010-08-01), pages 381-392, XP011334330, ISSN: 1551-3203, DOI: 10.1109/TII.2010.2051954 * abstract * * page 387 * | 1-13 | TECHNICAL FIELDS SEARCHED (IPC) <br><br> H04J <br> G05B |

The present search report has been drawn up for all claims

| Place of search | Date of completion of the search | Examiner |
|---|---|---|
| The Hague | 9 October 2023 | Marongiu, M |

EPO FORM 1503 03.82 (P04C01)

## ANNEX TO THE EUROPEAN SEARCH REPORT
## ON EUROPEAN PATENT APPLICATION NO.

EP 23 30 5616

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2023

| Patent document cited in search report | | Publication date | Patent family member(s) | | Publication date |
|---|---|---|---|---|---|
| EP 4149027 | A1 | 15-03-2023 | CN | 115801161 A | 14-03-2023 |
| | | | EP | 4149027 A1 | 15-03-2023 |
| | | | US | 2023079341 A1 | 16-03-2023 |
| WO 2020200947 | A1 | 08-10-2020 | NONE | | |

EPO FORM P0459

For more details about this annex : see Official Journal of the European Patent Office, No. 12/82